# EUROPEAN PATENT SPECIFICATION

(11) **EP 0 297 824 B1**
(45) Date of publication and mention of the grant of the patent: **17.08.1994**
(21) Application number: 88305861.2
(22) Date of filing: 28.06.1988
(51) Int. Cl.: C08F 10/00, C08F 4/10, C08F 4/62

(54) **Method for crystallizing magnesium chloride for use in a catalyst composition**
Verfahren zur Kristallisation von Magnesiumchlorid und Verwendung in Katalysatorzusammensetzungen
Procédé de cristallisation de chlorure de magnésium et l'application à des compositions catalytiques

(30) Priority: 29.06.1987 US 67040
(43) Date of publication of application: 04.01.1989
(73) Proprietor: SHELL OIL COMPANY, Houston Texas 77002 (US)
(72) Inventor: Job, Robert Charles, Houston Texas 77077 (US)
(74) Representative: Cresswell, Thomas Anthony

(56) References cited:
- EP-A- 0 012 591
- EP-A- 0 297 076
- DE-A- 1 942 734
- FR-A- 2 200 291
- Felix I. Jacobson, High Yield Catalyst for Polypropylene, page 1, presented at the IUPAC meeting of 12.07.82 to 16.07.82

## Description

This invention relates to a process for preparing low melting crystalline magnesium halide alcohol complexes for use in preparing solid olefin polymerization catalyst components having improved particle shape and size distribution. The catalyst components can be used to produce polymer particles which mimic that improved shape and size distribution.

Magnesium halides of various degrees of purity are commercially available. These commercial compounds are prepared by known techniques which include but are not limited to precipitating the magnesium out of a solution containing both magnesium and a halogen and heating the resulting solid to remove all but traces of solvent.

The invention relates to the preparation of crystalline magnesium halide complexes, particularly magnesium chloride complexes, which are more pure than the commercially available precipitates and also to a method for using these pure crystalline complexes, in the preparation of a catalyst component having unique and unusual morphological properties, useful in olefin polymerization. The invention also relates to the preparation of catalyst systems from these types of catalyst components which systems can comprise magnesium, titanium and chlorine with an activating organoaluminum compound. These subsequently prepared catalysts are often referred to as "supported coordination catalysts" or "catalyst systems".

Supported coordination catalysts are disclosed in numerous patents. The catalyst systems of this type which have been disclosed in the prior art generally are able to produce olefin polymers in high yield and, in the case of catalysts for polymerization of propylene or higher alpha-olefins, with high selectivity to stereoregular polymers. However, further improvements in productivity at high stereoregularity are still being sought.

The objective of scientists in this art is to provide catalyst systems which exhibit sufficiently high activity to permit the production of olefin ploymers in a high yield and without the need for extracting residual catalyst components in a deashing step. In the case of propylene and higher alpha olefins, an equally important objective in this art is to provide catalyst systems of sufficiently high selectivity toward isotactic or otherwise stereoregular products to obviate the necessity of extracting atactic polymer components from the system.

Although many chemical combinations provide active catalyst systems, practical considerations have led scientists in the art to concentrate on certain preferred components. For convenience of reference, the following terms will be used for the catalyst components: the solid titanium-containing catalyst component will be referred to herein as the "procatalyst". The catalyst component containing the organoaluminum compound, whether used separately, or partially or totally complexed with an electron donor, will be referred to herein as the "cocatalyst". The catalyst component containing the electron donor compound, whether used separately, or partially or totally complexed with the organoaluminum compound, will be referred to herein as the "selectivity control agent" (SCA). The procatalysts typically comprise magnesium chloride, and titanium chloride, generally in tetravalent form. The electron donor typically is an aromatic ester such as ethyl benzoate or ethyl p-toluate. The cocatalyst typically is an aluminum trialkyl such as aluminum triethyl or aluminum tri-isobutyl. Often the cocatalyst is at least partially complexed with a selectivity control agent for use in the catalyst system. The selectivity control agent typically is an aromatic ester such as ethyl paramethoxy-benzoate (ethyl anisate) or methyl p-toluate.

While the selection of cocatalyst and selectivity control agent affects the performance of the resultant catalyst system, the component which appears to most significantly impact the system with respect to activity and productivity of the system is the procatalyst.

Preferred methods of preparing procatalysts are described in US-A-4,329,253, US-A-4,393,182, US-A-4,400,302 and US-A-4,414,132. These procatalysts are highly active and stereospecific. The typical manner of preparing such procatalysts involves the reaction of the magnesium compound, titanium tetrachloride and electron donor in the presence of a halohydrocarbon. The resulting solid particles are then contacted with additional quantities of TiCl₄ and the preparations are completed by washing off excess TiCl₄ using light hydrocarbons (eg. isooctane and isopentane) and drying.

The procatalysts prepared in this way have excellent polymerization activity (polymer yield) and stereospecific performance (isotactic content). However, for some applications the particle morphology is not ideal. In olefin polymerization, polymer morphology is known to be a replica of catalyst morphology. Still further, the procatalyst morphology can depend on the morphology of the starting magnesium compound. For example, if the optimal catalyst morphology is spherical, then it is desirable to use starting materials, magnesium compounds, having a spherical morphology.

A number of different approaches to improved morphology are suggested in the patent literature. One approach, disclosed in GB-A-2,101,610, involves reacting a solid particulate material with an organic magnesium compound then treating the supported magnesium composition with oxygen, carbon dioxide or a hydroxyl compound, then reacting the treated product with a carbonyl compound and simultaneously or subsequently reacting the resultant product with a transition metal compound. Another approach for improved morphology, disclosed in US-A-4,465,783, involves the spray drying of a transition metal composition, or a support for a transition metal compound, while suspended in a liquid medium. Still another method is disclosed in DE-A-2,839,188 wherein solid magnesium dialkoxide particles are dispersed into a suitable liquid phase, followed by spray drying. However, this last method is not attractive in commercial applications as the dispersed solid particles tend to clog the fine orifices of the spray-drying equipment as well as clog and foul the pumping and metering systems. In US-A-4,540,679 the use is described of a magnesium hydrocarbyl carbonate support. A suspension of magnesium alcoholate with carbon dioxide is reacted with a transition metal component to precipitate a "magnesium hydrocarbyl carbonate" support. The patentees use a number of techniques, including prepolymerization and the use of triethyl aluminum (TEA), to remove ethanol and to improve productivity. However, these techniques have drawbacks since pre-polymerization is a required additional step and the addition of TEA adds ash to the polymer product.

A new approach has now been found which permits the preparation of procatalyst particles having not only excellent productivity and selectivity, but also possessing excellent morphology. Catalysts comprising such procatalyst particles have high activity and selectivity when used in polymerizing olefins such as propylene. The catalysts are able to produce polymer in the form of spheres. The shape of the polymer is limited only by the imperfections in the support used to prepare the procatalyst. Perfectly spherical polymer has significantly higher bulk density than polymer prepared with catalysts that are not perfectly spherical.

This invention provides a method for making crystalline magnesium halide particles having the formula MgₙEₘXₚ.yROH, wherein E is a metal, X is halogen, ROH is an alcohol, n is a number from 0.25 to 6, m is 0 or 1, p is a number from 2n to (am+2n), where a is the valence of the metal E, and y is a positive number of up to 6, which method comprises contacting a magnesium compound of the formula MgₙEₘXₚ, wherein the various symbols are as defined herein, or precursor(s) thereof, with an alcohol of the formula ROH to form a solution thereof, heating the solution to remove an azeotrope of water and the alcohol, and contacting the heated solution with an inert hydrocarbon liquid to precipitate crystalline particles.

The invention also provides a method of making supported particles which comprises the further steps of melting the resulting crystalline magnesium halide particles at a temperature of 80°C to 200°C, and adding a porous support to the molten product to form supported magnesium halide particles.

The invention further provides a method for making a procatalyst component which comprises the still further steps of halogenating the supported particles with a first halide of tetravalent titanium and a first electron donor to form a halogenated product, contacting the halogenated product with a second halide of tetravalent titanium and a second electron donor to form a treated halogenated product, contacting the treated halogenated product with a third halide of tetravalent titanium and additional second electron donor at a temperature from 40°C to 140°C, and washing the resulting treated product with an inert hydrocarbon liquid.

Still further the invention provides a method of preparing a catalyst system which comprises contacting a procatalyst prepared as just described with a cocatalyst comprising an organoaluminum compound in molar ratios which produce an atomic ratio of Al to Ti of from 1/1 to 150/1.

Yet further the invention provides a method of preparing an olefin polymer which comprises the liquid pool polymerisation (LIPP) of at least one alpha olefin having from 2 to 8 carbon atoms in the presence of hydrogen at a temperature of at least 60°C in the presence of a catalyst prepared as described in the preceding paragraph.

As shown in the examples which follow, propylene polymers produced with a catalyst system prepared in accordance with the present invention have an extremely low level of fines (ie. very little polymer smaller than 250µm in diameter). Accordingly, this catalyst system can be very useful in gas phase processes where fines are deleterious to the process. Further, it is possible to use the catalyst system to produce polymer having a uniformly optimized particle size, ie. a relatively narrow particle size distribution. Such polymers may also have a higher bulk density (above 0.38 g/cc) and a ratio of short diameter (sd) to long diameter (ld) between 0.7/1 to 1.0/1.

The catalyst system can be used in the preparation of homopolymers or copolymers of alpha olefins having 2 to 8 carbon atoms, and in particular for the polymerization of propylene.

The primary method of the present invention involves preparing a unique magnesium halide compound , preferably a magnesium chloride compound, which is essentially pure, by crystallization. In the general formula MgₙEₘXₚ.yROH for the magnesium halide compound, the metal E can be a transition group metal or main group metal, for example iron, cobalt, aluminum or calcium. The magnesium halide particles can be prepared from a starting material such as a commercial grade of magnesium chloride having the molecular formula MgCl₂. Anhydrous magnesium chloride available from Alfa Products can be used as starting material. A starting material of this type is actually a mixture of the compounds: magnesium chloride, magnesium oxide, magnesium chloro-oxide and small amounts of hydrated magnesium chloride.

In the present invention, the crystallized magnesium halide compound is prepared by adding the magnesium halide, preferably an anhydrous grade of magnesium chloride, to an alcohol. Preferably the alcohol is a linear aliphatic alcohol, such as ethanol, propanol, butanol, or dodecanol.

Once the magnesium halide has been added to the alcohol, the components are, for example, stirred to form a solution which is then heated to remove an azeotrope of water and the alcohol. Suitably the solution is brought to a boil in order to allow for distillation of an azeotrope. After a portion of the alcohol has distilled away, an optionally preheated inert hydrocarbon, such as kerosene or an isooctane, is added to the solution. The solution is then cooled. A pure crystalline magnesium halide alcohol complex will then precipitate from the cooling solution, in the form of crystals, in exact ratios. It has been found that the slower the solution is cooled, the larger in diameter the crystals become.

The resulting crystals can be used to form the supported particles useful for preparing procatalysts used to prepare catalysts which are in turn used for the polymerization of olefins.

To prepare the supported particles, the pure crystals of magnesium halide complex (prepared according to the method described above), are melted. Melting can occur at temperatures of 80°C to 200°C; more preferably between 100°C and 150°C, and most preferably between 100°C and 120°C.

Proportionate amounts of porous support particles, such as pure silica, are then added to the molten product. The amounts preferably should be sufficient to completely fill the pores of the support particles with the magnesium halide complex.

The support particles are preferably of silica, although particles of polystyrene, polyurethane and polyvinyl chloride may be used. Silica allows thorough permeation of the magnesium halide throughout the silica particles due to the porous nature of the silica, and provides for more uniformly shaped spherical procatalyst particles. The support particles and the molten magnesium halide complex are blended together (not solution blended) to provide a homogeneous distribution of magnesium halide within the sphere of the support. Silica particles with distinct pore volumes are preferred for use within the present invention. It has been found that particles which can support 0.5 to 2 g of MgCl₂/g silica are usable within the scope of the invention. The preferred pore volume of silica usable within the scope of this invention is 1.4 to 3.0 ml/gram of silica.

The supports, such as the silica supports, are solid particulate, preferably substantially spherical, materials which are inert to the other components of the catalyst composition, and inert to the other active components of the reaction system. These support materials can be inorganic materials such as oxides of silicon and aluminum, molecular sieves, or organic materials, such as polymers. Polymers, including but not limited to those mentioned above, polyethylene and polyester should be useable within the scope of the present invention. When the support materials are inorganic oxides, the supports are in the form of dry powders having an average particle size of 10 to 250 µm and preferably 50 to 150 µm. It is most preferred that these supports be porous and have a surface area of at least 3 square meters per gram and preferably at least 50 square meters per gram. The inorganic oxides should be "dry", provided the term "dry" means free of adsorbed water. Drying of the oxide material can be carried out prior to adding the support to the molten product, by heating the support at a temperature of, for example, greater than 100°C for a period of time or by chemically treating. Both techniques are well known in the art. In the case of silica supports, drying is suitably carried out by heating in a stream of dry inert gas at 150°C to 450°C, preferably 150°C to 300°C, eg 150°C or 300°C.

The supports are added to the molten product and then stirred. Typically the mixture is maintained at atmospheric pressure and at a temperature between 100°C and 200°C until the resulting articles appear dry. The temperature and pressure may be varied to achieve the desired result.

Once these supported particles of the magnesium halide complex have, preferably completely, been obtained, it is necessary to convert the magnesium compound to a magnesium halide by one or more metathesis reactions (digestions), such as by the procedure disclosed in US-A-4,414,132, to provide a procatalyst.

The first step in preparing procatalysts usable in olefin polymerization involves halogenating the supported particles, (which can for convenience be represented by the formula MgX*silica where Mg is the magnesium component, X is a halogen and "silica" represents an essentially anhydrous form of silica), with a halide of tetravalent titanium, preferably in the presence of a halohydrocarbon, and one or more electron donors, to form a halogenated product.

It is most preferred to react the supported particles to provide a fully halogenated reaction product, ie. a magnesium dihalide. Such halogenation reactions are suitably effected by employing a molar ratio of magnesium compound to titanium compound of 0.005:1 to 2:1, preferably 0.01:1 to 1:1. These halogenation reactions are most preferably conducted in the presence of a halohydrocarbon and an electron donor, although the halohydrocarbon is optional. An inert hydrocarbon diluent or solvent may also be present. It may be possible to use a partially halogenated magnesium particle within the scope of the present invention.

Suitable halides of tetravalent titanium include aryloxy- or alkoxy-di and trihalides, such as dihexanoxy-titanium dichloride, diethoxy-titanium dibromide, isopropoxy-titanium tri-iodide and phenoxy-titanium trichloride. Titanium tetrahalides are preferred and titanium tetrachloride is the most preferred halide for use in this invention. These halides of tetravalent titanium can be used as such, i.e. as the neat substance, or as concentrated solutions in a solvent, preferably inert, such as a hydrocarbon or halohydrocarbon.

Suitable electron donors which are used in the preparation of the solid procatalyst component of the present invention are ethers, esters, ketones, phenols, amines, amides, imines, nitriles, phosphines, phosphites, stibines, arsines, phosphoramides and alcoholates. Examples of suitable donors are those referred to in US-A 4,136,243 or its equivalent GB-A-1,486,194 and in GB-A-1,554,340 or DE-A-2,729,126. Preferred donors include esters, diesters and diamines, particularly esters and diesters of carboxylic acids, preferably aromatic carboxylic acids, such as ethyl and methyl benzoate, p-methoxy ethyl benzoate, p-ethoxy methyl benzoate, ethyl acrylate, methyl methacrylate, ethyl acetate, dimethyl carbonate, dimethyl adipate, isobutyl phthalate, dihexyl fumarate, dibutyl maleate, ethylisopropyl oxalate, p-chloro ethyl benzoate, p-amino hexyl benzoate, isopropyl naphthenate, n-amyl toluate, ethyl cyclohexanoate, propyl pivalate, N,N,N′,N′-tetramethylethylenediamine, and also 1,2,4-trimethylpiperazine, 2,3,4,5-tetraethylpiperidine and similar compounds. The electron donors may be used singly or in combination. Most preferred electron donors for use in preparing the solid procatalyst component are ethyl benzoate and isobutyl phthalate.

In the text of this patent, electron donors used in the novel methods will be distinguishable from each other as being "primary electron donors" or "secondary electron donors". The phrase "primary electron donor" means the electron donor that has the largest mol percent of all electron donors present in the final procatalyst. The phrase "secondary electron donor" means the electron donor that has the second largest mole percent of all electron donors present in the final procatalyst.

The halogenation step normally proceeds until a solid reaction product forms which can be isolated from the liquid reaction medium by filtration, decantation or any other suitable method. The reaction product may be subsequently washed with an inert hydrocarbon diluent, such as n-hexane, iso-octane, or toluene, to remove unreacted material, which can include physically absorbed halohydrocarbon.

Suitable halohydrocarbons usable in this invention include compounds such as butyl chloride and amyl chloride. Preferred aliphatic halohydrocarbons are halogen-substituted hydrocarbons with 1 to 12 carbon atoms per molecule and preferably less than 9 carbon atoms per molecule and which comprise at least two halogen atoms, such as dibromomethane, trichloromethane, carbon tetrachloride, 1,2-dichloroethane, dichlorobutane, 1,1,2-trichloroethane, trichlorocyclohexane, dichlorofluoroethane, trichloropropane, trichlorofluorooctane, dibromodifluorodecane, hexachloroethane and tetrachloroisooctane. Carbon tetrachloride and 1,1,2-trichloroethane are preferred aliphatic halohydrocarbons. Aromatic halohydrocarbons may also be employed, such as chlorobenzene, bromobenzene, dichlorobenzene, dichlorodibromobenzene, naphthyl chloride, chlorotoluene and dichlorotoluenes. Dichlorobenzene and to a greater extent chlorobenzene are the preferred aromatic halohydrocarbons.

Subsequent to halogenation, the halogenated product is contacted with a halide of tetravalent titanium , such as a dialkoxy-titanium dihalide, alkoxy-titanium trihalide, phenoxy-titanium trihalide or titanium tetrahalide. The most preferred titanium compounds include the titanium tetrahalides, and titanium tetrachloride in particular. This contracting treatment increases the content of tetravalent titanium in the resultant solid procatalyst component. This increase in content preferably should be sufficient to achieve a final atomic ratio of tetravalent titanium to magnesium in the resultant solid catalyst component of from 0.005/1 to 1.0/1, and preferably from 0.02/1 to 0.2/1. Contacting the halogenated product with the halide of tetravalent titanium is most suitably carried out at a temperature of 40° to 140°C for 0.1 to 6 hours, and optionally in the presence of an inert hydrocarbon or halohydrocarbon diluent. Preferred contacting temperatures are between 70° and 120°C, and the most preferred contacting period is 0.5 to 3.5 hours. This treatment may be carried out in successive contacts of solid with separate portions of halide of tetravalent titanium, optionally in the presence of a halohydrocarbon which may contain suitable electron donors chosen from those previously listed.

The preferred halogen atom, possibly contained in the magnesium compound to be halogenated, and contained in the titanium compound which serves as halogenating agent and in the tetravalent titanium halide with which the halogenated product is contacted, is chlorine.

One aspect of the present invention involves treating the halogenated product with a particular second electron donor, subsequent to, or concurrent with, the treatment of the magnesium compound with the initial tetravalent titanium halide to enhance the selectivity of the catalyst and yield of the resultant polymers.

The treated procatalyst component can be isolated from the liquid reaction medium by washing to remove unreacted titanium compound from the reaction product. The titanium content of the final, washed catalyst constituent is preferably 1.5 to 3.6 percent by weight but can be up to 4.5 percent by weight.

The material used to wash the procatalyst component is an inert hydrocarbon liquid. Preferred inert hydrocarbon liquids are aliphatic, alicyclic or aromatic hydrocarbons. Specific examples include iso-pentane, n-hexane, iso-octane and toluene with iso-pentane being the most preferred.

The amount of inert hydrocarbon liquid employed can be 5 to 100 cm³/gm of procatalyst in each of 2 to 6 separate washes. Preferably, about 25 cc/gm of liquid to procatalyst is used.

The resulting washed solid component is the procatalyst, which can be used with a cocatalyst and a selectivity control agent in the polymerization of olefins.

The organoaluminum compound to be employed as cocatalyst may be chosen from any of the known activators used in olefin polymerization catalyst systems which comprise a titanium halide. While trialkylaluminum compounds, dialkylalumimum halides and dialkylaluminum alkoxides may be used, trialkylaluminum compounds are preferred, particularly those wherein each of the alkyl groups has 2 to 6 carbon atoms, e.g. triethylaluminum, tri n-propylaluminum, triisobutylaluminum, triisopropylaluminum and dibutyl-n-amylaluminum.

Suitable electron donors, which are used in combination with or reacted with an organoaluminum compound, as the selectivity control agents, (SCA), and which can also be used in the preparation of the solid procatalyst component are ethers, esters, ketones, phenols, amines, amides, imines, nitriles, phosphines, silanes, phosphites, stibines, arsines, phosphoramides and alcoholates. Examples of suitable donors are those mentioned earlier herein. Preferred electron donors are esters and organic silicon compounds. Preferred esters are esters of carboxylic acids, aromatic carboxylic acids, such as ethyl and methyl benzoate, p-methoxy ethyl benzoate, p-ethoxy methyl benzoate, p-ethoxy ethyl benzoate, ethyl acrylate, methyl methacrylate, ethyl acetate, dimethyl carbonate, dimethyl adipate, dihexyl fumarate, dibutyl maleate,ethylisopropyl oxalate, p-chloro ethyl benzoate, p-amino hexyl benzoate, isopropyl naphthenate, n-amyl toluate, ethyl cyclohexanoate and propyl pivalate. Examples of the organic silicon compounds useful herein include alkoxysilanes and acyloxysilanes of the general formula R¹ₙ Si(OR²)₄₋ₙ where n is between zero and three, R¹ is a hydrocarbon group or a halogen atom and R² is a hydrocarbon group. Specific examples include trimethylmethoxy silane, triphenylethoxy silane, dimethyldimethoxy silane and phenyltrimethoxy silane. The electron donor used as selectivity control agent in the catalyst may be the same as or different from the donor used in preparing the titanium-containing procatalyst.

Most preferred first and second electron donors for use in preparing the titanium procatalyst are dimethyl napthalene as the initial electron donor and diisobutyl phthalate, or ethyl benzoate as the second electron donor; or diisobutyl phthalate as the initial electron donor and ethyl benzoate as the second donor. Most preferred selectivity control agents for use in the total catalyst are p-ethoxy ethyl benzoate, phenethyltrimethoxy silane and diphenyldimethoxy silane.

Preferred proportions of selectivity control agent, employed separately, in combination with, or reacted with, an organoaluminum compound, calculated as mol per mol aluminum compound, are from 0.005 to 1.5, particularly from 0.05 to 0.5. Preferred proportions of selectivity control agent, calculated as mol per mol Ti, are 0.1 to 50, particularly 0.5 to 20.

Proportions of primary electron donor contained in the solid catalyst component, calculated as mol per mol of titanium, are suitably 0.01 to 10, more preferably 0.05 to 5, and most preferably 0.05 to 3.

Proportions of secondary electron donor contained in the solid procatalyst component, calculated as mol per mol of titanium, are suitably 0.01 to 2, and preferably 0.05 to 0.5.

Procatalyst, cocatalyst and selectivity control agent, if used separately, may be simply combined, in molar ratios which produce, in the final catalyst, an atomic ratio of aluminum (from cocatalyst) to titanium (from procatalyst) of 1/1 to 150/1, and suitably from 10/1 to 150/1. In general, Al/Ti ratios of 30/1 to 100/1 and more preferably 50/1 to 80/1 will be found advantageous within the scope of the present invention.

The productivity of the procatalyst is determined as kilograms (Kg) of polymer per gram (g) of procatalyst in a standard one or two hour batch polymerization reaction. Productivity of the procatalyst may also be expressed as Kg polymer/g titanium (Ti). Catalyst activity is sometimes reported as Kg polymer/g procatalyst/hr.

The selectivity of the catalyst to isotactic polypropylene is determined by measuring the amount of xylene soluble polymer (XS), in accordance with regulations of the U.S. Food and Drug Administration (FDA). The XS test is carried out as follows:

The sample is completely dissolved in xylene, which contains oxidation inhibitor, in a stirred flask by heating under reflux at 120°C. The flask is then immersed in a water bath at 25°C without stirring for one hour, during which the insoluble portion precipitates. The precipate is filtered off and the xylene solubles present in the filtrate are determined by evaporating a 10 ml aliquot of the filtrate, drying the residue under vacuum, and weighing the residue. The xylene-solubles consist of amorphous material with some low molecular weight crystalline material. (FDA regulations 121.2501 and 1.1.2510, 1971.)

The numerical value of XS in the case of propylene homopolymer is typically about 2 percent less than the XS amount of polymers extractable in refluxing n-heptane. Thus the isotacticity index of polypropylene (amount insoluble in refluxing n-heptane) is approximately 100 - (XS+2).

Specific details of the present invention follow.

### Heat Treatment of the Silica Support

20 g of porous silica spheres (5 to 50 µm in diameter) are placed in a 2.5 cm (1 inch) diameter quartz tube which is 46 cm (18 inches) long. Both ends of the tube are plugged with quartz wool and a gentle nitrogen flow is established through the tube. The part of the tube containing the silica spheres is placed in a tube furnace and the furnace is brought to drying temperature over a period of 45 minutes and then maintained at that temperature for 15 to 20 hours. Drying temperatures used for the examples described below were either 150°C or 300°C or 450°C. The silica was cooled over a period of about 1 hour under a flow of dried nitrogen and stored under dry nitrogen until use as a starting material for the present invention.

### Preparation of the Crystalline Magnesium Chloride Alcohol Complexes

### EXAMPLE 1

Magnesium chloride (technical anhydrous, containing unspecified amounts of water) (205 g, approx 2.0 mol) was placed in a 2 litre, 3-neck flask equipped with paddle stirrer and Friedrich's condenser. 1500 ml (16.4 mol) of 1-butanol was added and the mixture heated under gentle reflux for 1.5 days while the magnesium chloride dissolved completely. 300 ml (3.3 mol) of the butanol was distilled off, at 112°C (normal b.p. 117.7°C, water azeotrope b.p. approx 92°C), to azeotrope off any water. The clear solution (Solution A) was treated with 300 ml of isooctane and the solution allowed to cool to room temperature, whereupon an apparently gelatinous (but actually crystalline and easily filterable) precipitate formed. The precipitate was collected (under an inert atmosphere) on a coarse fritted glass funnel, washed with isooctane, and then washed with isopentane. The precipitate was then dried under moving nitrogen. The yield was 348 g of transparent white crystalline powder, containing 5.62% Mg. A second quantity (275 g) of precipitate was collected by distilling off another 300 ml of alcohol from Solution (A), then adding 100 ml of kerosene and allowing the result to cool overnight (5-14 hours).

### EXAMPLE 2

Magnesium chloride (technical, 205 g) was placed under gentle reflux in 1475 ml of n-propanol overnight. 500 ml of propanol was distilled away (at about 96.5°C) and 50 ml of kerosene (b.p. 140° - 150°C) and 400 ml of isooctane were added. After 4 hours of stirring, the product, a solid crystalline mass, was collected on a coarse fritted glass funnel, washed with isooctane and then washed with isopentane. After washing the precipitate was dried under moving nitrogen. Yield: 745 g of transparent flaky white crystals, having 6.53% Mg.

### EXAMPLE 3

Magnesium ethoxide (2.9 g) was suspended in 30 g of ethanol and the mixture heated to near boiling. Aluminum ethoxide (5 mmol) was added. Most of the magnesium ethoxide appeared to dissolve after 20 minutes of stirring. An additional amount, 20 mmol, of aluminum ethoxide was added to give a milky solution. To this solution was added the crystalline product from a treatment of 5 g of magnesium chloride with 50 ml of ethanol. The cloudy solution was filtered hot and then cooled to give a precipitate composed of, largely, hexagonal crystals surrounded by a small amount of needle shaped material. The hexagonal crystals were collected by decantation, washed with isopentane and dried under moving nitrogen. Analysis: Mg 6.44%, ethanol 55.0% (Theoretical for Mg₂AlCl₇*9Ethanol: Mg 6.58%, ethanol 56.15%).

### Preparation of the supported magnesium particles

### EXAMPLE 4 (Control example using untreated silica)

10 g of the n-propanol adduct of Example 2 above was heated to 140°C to produce a molten material. A total of 1.9 g of silica was added over a ten minute interval. After all of the silica was added, the mixture was held at 140°C for about 15 minutes to yield a dry, free-flowing powder. The powder was slurried in a mixture of 40 ml of isooctane with 16 ml of silicon tetrachloride and then stirred at room temperature for 1 hour. The mixture was then heated at 60°C for 1 hour. The solid was collected on a coarse fritted glass funnel, washed with isooctane and then dried under moving nitrogen. Analysis: Mg 10.0%. Yield: 6.5 g.

### EXAMPLE 5 (Control example using untreated silica)

13.2 g of the magnesium aluminum chloride ethanol adduct of Example 3 above was heated to 165°C to produce a molten material. A total of 1.7 g of silica was added over an interval of ten minutes. After all of the silica was added, the mixture was held at 165°C for about 45 minutes to yield a dry free-flowing powder. The powder was slurried in 40 ml of isooctane stirred at room temperature for 10 minutes. The solid was collected on a coarse fritted glass funnel, washed three times with isooctane, then dried under moving nitrogen. Yield: 11 g.

### EXAMPLE 6 (Control example using untreated silica)

13 g of the n-propanol adduct of Example 2 above was heated to 130°C to produce a molten material. A total of 4.4 g of silica was added over the course of ten minutes. After all of the silica had been added, the mixture was held at 140°C for about 30 minutes to yield a dry free-flowing powder. The powder was slurried in 50 ml of isooctane, then 20 ml of silicon tetrachloride was added dropwise, then the mixture stirred at room temperature for 1 hour. The mixture was then heated at 60°C for 45 minutes. The solid was collected on a coarse fritted glass funnel, washed with isooctane, then dried under moving nitrogen. Yield: 9.45 g.

### EXAMPLE 7 (using 150°C treated silica)

The procedure of Example 6 was followed except that 2.8 g of 150°C treated silica was used. Yield: 9.0 g of free flowing powder.

### EXAMPLE 8 (using 150°C treated silica)

The procedure of Example 6 was followed except that 4.0 g of 150°C treated silica was added all in one portion.

### EXAMPLE 9 (using 300°C treated silica)

The procedure of Example 6 was followed except that 4.0 g of 300°C treated silica was used.

### EXAMPLE 10

The procedure of Example 6 was followed except that 4.0 g of 450°C treated silica was used.

### EXAMPLE 11 (using ethyl benzoate (EB) in supporting step on untreated silica)

13 g of the n-propanol adduct of Example 2 above was heated to produce a molten material. Ethyl benzoate (EB) (1.3 g) was added. Next, a total of 3.3 g of silica was added over the course of ten minutes. After all of the silica had been added, the mixture was a dry free-flowing powder. The powder was slurried in 50 ml of isooctane, then 20 ml of silicon tetrachloride was added dropwise, over a 15 minute period. The mixture was then stirred at room temperature for 1 hour. After stirring, the mixture was heated at 60°C for 60 minutes. The solid was collected on a coarse fritted glass funnel, washed with isooctane, then dried under moving nitrogen. Yield: 8.9 g.

### EXAMPLE 12 (using EB in supporting step on 150°C treated silica)

The procedure of Example 11 was followed except that 4.0 g of 150°C treated silica was added all in one portion.

### EXAMPLE 13 (using EB in supporting step on 300°C treated silica)

The procedure of Example 11 was followed except that 4.0 g of 300°C treated silica was used.

### EXAMPLE 14

The procedure of Example 11 was followed except that 4.0 g of 450°C treated silica was used.

### Preparation of the Procatalysts

In the following examples, the procatalysts (Examples 15-27) were prepared as follows: Electron donor (type and amount shown in the examples) were added along with 150 ml of a 1:1 (vol:vol) mixture of titanium tetrachloride and chlorobenzene to 50 mmol of the appropriate magnesium precursor (shown in the examples) and stirred at room temperature for up to about 15 minutes. The mixture was then stirred for up to an hour at 110°C and filtered hot, at about 110°C.

The residual solid was slurried in 150 ml of the 1:1 titanium tetrachloride/chlorobenzene solution and about 3.4 mmol benzoyl chloride (see US-A- 4,535,068) or 3.3 mmol of isobutyl phthalate (Example 20). The slurry was stirred for up to about an hour at 110°C and filtered at about the same temperature. The solid was then slurried in 150 ml of a 1:1 titanium tetrachloride/chlorobenzene solution (and, for Example 20, 3.3 ml of isobutyl phthalate was added) and stirred at about 110°C for up to about 30 minutes and filtered again at about that same temperature. The reaction vessel was cooled to below 40°C and the solid was washed 6 times with 150 ml portions of isopentane, then dried for 100 minutes, at 40°C, under moving nitrogen. The titanium, magnesium and ester contents for each of the various procatalysts are shown in Tables 1 and 2. The catalysts of Examples 15 and 16 are control examples using no silica support.

For LIPP polymerizations using the above described catalysts, a 3.8 litre (one U.S. gallon) autoclave with a 6.4 cm (2.5 inch) paddle stirrer and a two slat baffle was charged with 2.7 litres of propylene and 132 mmol hydrogen, then heated to 60°C, whereupon 0.35 mmol ethyl-p-ethoxy benzoate (PEEB) was injected, followed closely by 0.70 mmol of triethylaluminum (TEA), followed by a 5% mineral oil slurry of procatalyst containing 0.01 mmol of Ti. After the initial exotherm, the reactor temperature was held at 67°C for 1 hour. For the phthalate ester based catalyst of Example 20 the same method was applied, except that a different selectivity control agent was used, thus: to the propylene hydrogen mixture at 65°C was injected first 0.14 mmol of diphenyldimethoxysilane (DPDMS) followed by 0.56 mmol of TEA followed by a procatalyst slurry containing from 0.01 mmol of Ti and polymerization carried out for a two hour period.

Gas phase polymerizations as well as solution slurry polymerizations using the novel procatalyst and resultant catalyst system are contemplated as within the scope of the present invention.

The various catalysts prepared above are compared in Tables 1 and 2. Not all results are shown. Catalyst productivities and representative morphologies are shown. All of the silica supported catalysts produced polymer comprised of essentially spherical particles. A comparison of the particle size distribution of polymer formed with the particle size distribution of the starting silica (Silica microspheres as provided by the manufacturer, PQ Corporation) shows that the polymer morphology exactly replicates catalyst morphology both as to shape as well as size distribution.

Table 2 shows that the catalysts prepared upon supports that have been heat treated to at least 150°C (to remove most of the adsorbed water) provide optimum productivity and selectivity.

**TABLE 1**

| Stoichiometric Compositions of Examples 15 to 27 | | | | | |
|---|---|---|---|---|---|
| Catalyst Example | Magnesium Precursor Example | Ti (% w) | Mg (% w) | EB (% w) | Phthalate ester (% w) |
| 15 (no SiO₂) | 1 | 3.74 | 16.0 | 7.5 | -- |
| 16 (no SiO₂) | 3 | 4.79 | 18.2 | | -- |
| 17 | 4 | 3.02 | 11.0 | 1.9 | -- |
| 18 | 5 | 2.80 | 16.3 | 6.7 | -- |
| 19 | 6 | 3.58 | 9.4 | 3.4 | -- |
| 20 | 7 | 4.88 | 8.5 | 0.8 | 21.3 |
| 21 | 8 | 3.21 | 8.8 | 4.4 | -- |
| 22 | 9 | 3.85 | 9.0 | 5.8 | -- |
| 23 | 10 | 2.83 | 9.6 | 4.6 | -- |
| 24 | 11 | 4.25 | 10.6 | 4.4 | -- |
| 25 | 12 | 2.17 | 7.8 | 2.8 | -- |
| 26 | 13 | 3.13 | 9.4 | 3.6 | -- |
| 27 | 14 | 2.70 | 8.7 | 4.1 | -- |

**TABLE 2**

| Productivities and Polymer Characteristics for Propylene Polymerizations Carried out Using the Catalysts of Examples 15 to 27. (The column on initial silica treatment has been inserted in an attempt to make interexample comparisons easier.) | | | | |
|---|---|---|---|---|
| Example | Productivity (Kg PP/g Cat) | Xylene Solubles (% w) | Initial Silica Treatment | Polymer Morphology |
| 15 (Control) | 13.8 | 7.8 | no silica | fine powder (bulk density about 0.25) |
| 16 (Control) | 5.1 | 6.9 | no silica | fine powder (bulk density about 0.25) |
| 17 | 4.9 | 19.7 | unheated | spherical |
| 18 | 4.2 | 11.0 | unheated | spherical |
| 19 | 8.4 | 7.1 | unheated | spherical (bulk density 0.41, some powder present) |
| 20 | 6.9 | 7.1 | 150°C | spherical |
| 21 | 10.8 | 6.3 | 150°C | spherical |
| 22 | 10.3 | 6.0 | 300°C | spherical |
| 23 | 11.9 | 8.0 | 450°C | spherical (bulk density 0.36) |
| 24 | 5.7 | 7.3 | unheated + EB | spherical |
| 25 | 6.9 | 6.6 | 150°C + EB | spherical |
| 26 | 9.4 | 7.5 | 300°C + EB | spherical |
| 27 | 9.3 | 6.7 | 450°C + EB | |

## Claims

1. A method for making crystalline magnesium halide particles having the formula Mgₙ EₘXₚ.yROH, wherein E is a metal, X is halogen, ROH is an alcohol, n is a number from 0.25 to 6, m is 0 or 1, p is a number from 2n to (am+2n), where a is the valence of the metal E, and y is a positive number of up to 6, which method comprises contacting a magnesium compound of the formula MgₙEₘXₚ, wherein the various symbols are as defined herein, or precursor(s) thereof, with an alcohol of the formula ROH to form a solution thereof, heating the solution to remove an azeotrope of water and the alcohol, and contacting the heated solution with an inert hydrocarbon liquid to precipitate crystalline particles.

2. A method according to claim 1, wherein said metal E is a transition group metal or main group metal.

3. A method according to claim 2, wherein said metal is iron, chromium, cobalt, aluminum or calcium.

4. A method according to claim 1, 2 or 3, wherein X is chlorine.

5. A method according to any one of the preceding claims, wherein said alcohol is a linear aliphatic alcohol.

6. A method according to claim 5, wherein said alcohol is ethanol, propanol, n-butanol or n-dodecanol.

7. A method for making supported particles which comprises the method claimed in any one of claims 1 to 6 and the additional steps of melting the resulting crystalline magnesium halide particles at a temperature of 80°C to 200°C, and adding a porous support to the molten product to form supported magnesium halide particles.

8. A method according to claim 7, wherein the crystalline particles are melted at 100°C to 150°C.

9. A method according to claim 7 or 8, wherein said porous support comprises essentially anhydrous silica particles having a pore volume of 1.4 to 3ml/g.

10. A method according to claim 9, wherein the silica particles have been dried by heating in a stream of dry inert gas at 150°C to 450°C.

11. A method according to claim 10, wherein the silica has been heated at 150°C to 300°C.

12. A method for making a procatalyst component which comprises the method claimed in any one of claims 7 to 11 and the additional steps of halogenating the resulting supported particles with a first halide of tetravalent titanium and a first electron donor to form a halogenated product, contacting the halogenated product with a second halide of tetravalent titanium and a second electron donor to form a treated halogenated product, contacting the treated halogenated product with a third halide of tetravalent titanium and additional second electron donor at a temperature from 40°C to 140°C, and washing the resulting treated product with an inert hydrocarbon liquid.

13. A method according to claim 12, wherein said first electron donor is isobutyl phthalate and the second electron donor is ethyl benzoate.

14. A method according to claim 12 or 13 wherein said halogenated product is produced in the presence of a halogenated hydrocarbon.

15. A method according to claim 14, wherein said halogenated hydrocarbon is chlorobenzene.

16. A method according to any one of claims 12 to 15, wherein the amount of the first electron donor is between 10 and 15 wt% of the halogenated product.

17. A method according to any one of claims 12 to 16, wherein at least two different compounds are used as the first, second and third halides of tetravalent titanium.

18. A method according to any one of claims 12 to 17, wherein titanium tetrachloride is used as at least one of the first, second and third halides of tetravalent titanium.

19. A method for preparing a catalyst system comprising the method claimed in any one of claims 12 to 18 and the additional step of contacting a procatalyst prepared in accordance with a cocatalyst comprising an organoaluminum compound in molar ratios which produce an atomic ratio of Al to Ti of from 1/1 to 150/1.

20. A method of preparing an olefin polymer which comprises the method claimed in claim 19 and the additional step of the liquid pool polymerisation of at least one alpha olefin having from 2 to 8 carbon atoms in the presence of hydrogen at a temperature of at least 60°C in the presence of the resulting catalyst system.

## Patentansprüche

1. Verfahren zur Herstellung von kristallinen Magnesiumhalogenid-Teilchen der Formel MgₙEₘXₚ.yROH, worin E ein Metall ist, X Halogen ist, ROH ein Alkohol ist, n eine Zahl von 0,25 bis 6 ist, m 0 oder 1 ist, p eine Zahl von 2n bis (am+2n) ist, wobei a die Wertigkeit des Metalls E darstellt, und y eine positive Zahl von bis zu 6 ist, wobei das Verfahren umfaßt, eine Magnesiumverbindung der Formel MgₙEₘXₚ, in welcher die verschiedenen Symbole wie bereits hierin definiert sind, oder ein oder mehrere Vorläufer derselben mit einem Alkohol der Formel ROH in Kontakt zu bringen, um eine Lösung derselben herzustellen, die Lösung zu erwärmen, um ein Azeotrop aus Wasser und dem Alkohol zu entfernen, und die erwärmte Lösung mit einer inerten Kohlenwasserstoff-Flüssigkeit in Kontakt zu bringen, um kristalline Teilchen auszufällen.

2. Verfahren nach Anspruch 1,
worin das Metall E ein Übergangsmetall oder ein Hauptgruppenmetall ist.

3. Verfahren nach Anspruch 2,
worin das Metall Eisen, Chrom, Cobalt, Aluminium oder Calcium ist.

4. Verfahren nach einem der Ansprüche 1, 2 oder 3,
worin X Chlor ist.

5. Verfahren nach irgendeinem der vorangegangenen Ansprüche,
worin der Alkohol ein linearer aliphatischer Alkohol ist.

6. Verfahren nach Anspruch 5,
worin der Alkohol Ethanol, Propanol, n-Butanol oder n-Dodekanol ist.

7. Verfahren zur Herstellung von Teilchen auf einem Trägermaterial,
welches das Verfahren nach irgendeinem der Ansprüche 1 bis 6 und die zusätzlichen Schritte umfaßt, die resultierenden kristallinen Magnesiumhalogenid-Teilchen bei einer Temperatur von 80°C bis 200°C zu schmelzen und ein poröses Trägermaterial dem geschmolzenen Produkt zuzugeben, um Magnesiumhalogenid-Teilchen auf einem Trägermaterial herzustellen.

8. Verfahren nach Anspruch 7,
worin die kristallinen Teilchen bei 100°C bis 150°C geschmolzen werden.

9. Verfahren nach Anspruch 7 oder 8,
worin das poröse Tragermaterial im wesentlichen Teilchen aus wasserfreiem Siliciumdioxid mit einem Porenvolumen von 1,4 bis 3 ml/g umfaßt.

10. Verfahren nach Anspruch 9,
worin die Siliciumdioxid-Teilchen durch Erwärmen in einem Strom trockenen Inertgases bei 150°C bis 450°C getrocknet worden sind.

11. Verfahren nach Anspruch 10,
worin das Siliciumdioxid bei 150°C bis 300°C erwärmt worden ist.

12. Verfahren zur Herstellung eines Prokatalysatorbestandteils,
welches das Verfahren nach irgendeinem der Ansprüche 7 bis 11 und die zusätzlichen Schritte umfaßt, die resultierenden Teilchen auf einem Trägermaterial mit einem ersten Halogenid vierwertigen Titans und einem ersten Elektronendonator zu halogenieren, um ein halogeniertes Produkt herzustellen, das halogenierte Produkt mit einem zweiten Halogenid vierwertigen Titans und einem zweiten Elektronendonator in Kontakt zu bringen, um ein behandeltes halogeniertes Produkt herzustellen, das behandelte halogenierte Produkt mit einem dritten Halogenid vierwertigen Titans und zusätzlichem zweitem Elektronendonator bei einer Temperatur von 40°C bis 140°C in Kontakt zu bringen und das resultierende behandelte Produkt mit einer inerten Kohlenwasserstoff-FIüssigkeit zu waschen.

13. Verfahren nach Anspruch 12,
worin der erste Elektronendonator Isobutylphthalat und der zweite Elektronendonator Ethylbenzoat ist.

14. Verfahren nach Anspruch 12 oder 13,
worin das halogenierte Produkt in Anwesenheit eines halogenierten Kohlenwasserstoffs hergestellt wird.

15. Verfahren nach Anspruch 14,
worin der halogenierte Kohlenwasserstoff Chlorbenzol ist.

16. Verfahren nach irgendeinem der Ansprüche 12 bis 15,
worin die Menge des ersten Elektronendonators zwischen 10 und 15 Gew.-% des halogenierten Produkts beträgt.

17. Verfahren nach irgendeinem der Ansprüche 12 bis 16,
worin mindestens zwei unterschiedliche Verbindungen als die ersten, zweiten und dritten Halogenide vierwertigen Titans verwendet werden.

18. Verfahren nach irgendeinem der Ansprüche 12 bis 17,
worin Titantetrachlorid als mindestens eines der ersten, zweiten und dritten Halogenide vierwertigen Titans verwendet wird.

19. Verfahren zur Herstellung eines Katalysatorsystems,
welches das Verfahren nach irgendeinem der Ansprüche 12 bis 18 und den zusätzlichen Schritt umfaßt, einen dementsprechend hergestellten Prokatalysator mit einem Cokatalysator, welcher eine Organoaluminiumverbindung umfaßt, in molaren Verhältnissen in Kontakt zu bringen, welche zu einem Atomverhältnis von Al zu Ti von 1:1 bis 150:1 führen.

20. Verfahren zur Herstellung eines Olefin-Polymers,
welches das Verfahren nach Anspruch 19 und den zusätzlichen Schritt einer "liquid pool"-Polymerisation von mindestens einem α-Olefin mit 2 bis 8 Kohlenstoffatomen in Anwesenheit von Wasserstoff bei einer Temperatur von mindestens 60°C in Anwesenheit des resultierenden Katalysatorsystems umfaßt.

## Revendications

1. Méthode de préparation de particules cristallines d'halogénure de magnésium de formule MgₙEₘXₚ.yROH, dans laquelle E représente un métal, X représente un atome d'halogène, ROH représente un alcool, n est un nombre compris entre 0,25 et 6, m vaut 0 ou 1, p est un nombre entier compris entre 2n et (am+2n), où a est la valence du métal E, et y est un nombre positif allant jusqu'à 6, la méthode comprenant la mise en contact d'un composé de magnésium de formule MgₙEₘXₚ, dans laquelle les différents symboles sont ceux définis ci-dessus, ou des précurseur(s) de celui-ci, avec un alcool de formule ROH pour former une solution de ce dernier, le chauffage de la solution pour éliminer un azéotrope d'eau et d'alcool, et la mise en contact de la solution chaude avec un liquide hydrocarboné inerte pour précipiter les particules cristallines.

2. Méthode conforme à la revendication 1, dans laquelle ledit métal E est un métal de transition ou un métal d'un groupe principal.

3. Méthode conforme à la revendication 2, dans laquelle ledit métal E est du fer, du chrome, du cobalte, de l'aluminium ou du calcium.

4. Méthode conforme aux revendications 1, 2 ou 3, dans laquelle X est un atome de chlore.

5. Méthode conforme à une quelconque des revendications précédentes, dans laquelle ledit alcool est un alcool aliphatique linéaire.

6. Méthode conforme à la revendication 5, dans laquelle ledit alcool est l'éthanol, le propanol, le n-butanol ou le n-dodécanol.

7. Méthode de préparation de particules supportées, comprenant la méthode conforme à une quelconque des revendications 1 à 6 et l'étape supplémentaire de fusion des particules cristallines d'halogénure de magnésium obtenues à une température de 80 °C à 200 °C, et l'addition d'un support poreux au produit fondu pour former des particules supportées d'halogénure de magnésium.

8. Méthode conforme à la revendication 7, dans laquelle les particules cristallines sont fondues à une température comprise entre 100 °Cet 150 °C.

9. Méthode conforme aux revendications 7 ou 8, dans laquelle ledit support poreux comprend essentiellement des particules de silice anhydre ayant un volume poreux de 1,4 à 3 ml/g.

10. Méthode conforme à la revendication 9, dans laquelle les particules de silice ont été séchées par chauffage dans un courant de gaz inerte anhydre à une température comprise entre 150 °C et 450 °C.

11. Méthode conforme à la revendication 10, dans laquelle la silice a été chauffée à une température de 150 °C et 300°C.

12. Méthode de préparation d'un composant précatalyseur comprenant la méthode d'une des revendications 7 à 11, et les étapes supplémentaires qui sont
l'halogénation des particules supportées obtenues avec un premier halogénure de titane tétravalent et avec un premier donneur d'électrons pour former un produit halogéné,
la mise en contact du produit halogéné avec un second halogénure de titane tétravalent et avec un second donneur d'électrons pour former un produit halogéné traité,
la mise en contact du produit halogéné traité avec un troisième halogénure de platine tétravalent et un deuxième donneur d'électrons supplémentaire à une température comprise entre 40 °C et 140 °C, et
le lavage du produit traité obtenu avec un liquide hydrocarboné inerte.

13. Méthode conforme à la revendication 12, dans laquelle le premier donneur d'électrons est le phtalate d'isobutyle et le deuxième donneur d'électrons est le benzoate d'éthyle.

14. Méthode conforme à la revendication 12 ou 13, dans laquelle ledit produit halogéné est préparé en présence d'un hydrocarbure halogéné.

15. Méthode conforme à la revendication 14, dans laquelle ledit hydrocarbure halogéné est le chlorobenzène.

16. Méthode conforme à une des revendications 12 à 15, dans laquelle la quantité du premier donneur d'électrons représente entre 10 et 15 % en poids du produit halogéné.

17. Méthode conforme à une quelconque des revendications 12 à 16, dans laquelle on utilise au moins deux composés différents comme premier, second et troisième halogénure de titane tétravalent.

18. Méthode conforme à une quelconque des revendications 12 à 17, dans laquelle on utilise le tétrachlorure de titane comme au moins un des premier, second et troisième halogénure de titane tétravalent.

19. Méthode de préparation d'un système de catalyseur comprenant la méthode conforme à une quelconque des revendications 12 à 18 et l'étape supplémentaire de mise en contact d'un précatalyseur préparé selon cette méthode, avec un cocatalyseur comprenant un composé organoaluminique avec des rapports molaires tels que le rapport d'atomes Al aux atomes Ti soit compris entre 1/1 et 150/1.

20. Méthode de préparation d'une polyoléfine comprenant la méthode conforme à la revendication 19 et l'étape supplémentaire de polymérisation en phase liquide d'au moins une α-oléfine comportant entre 2 et 8 atomes de carbone en présence d'hydrogène à une température d'au moins 60 °C enprésence du système de catalyseur obtenu.
